# DEMANDE DE BREVET EUROPEEN

(11) **EP 0 860 403 A2**
(43) Date de publication de la demande: **26.08.1998**
(21) Numéro de dépôt: 98830004.2
(22) Date de dépôt: 12.01.1998
(51) Int. Cl.: C02F 11/12

(54) **Appareillage pour le traitement des boues**

(30) Priorité: 20.01.1997 IT FI971097
(71) Demandeur: Ecogest S.r.l., 50142 Firenze (IT)
(72) Inventeur: Soldaini, Fulvio, 50030 Vaglia (Firenza) (IT)
(74) Mandataire: Martini, Lazzaro

(57) **Abrégé**

Appareillage pour le traitement des boues comprenant au moins une unité de bandes à transport superposées fermées en anneau entre une station (P) de prélèvement ou alimentation des boues (F) à traiter et une station (U) de sortie ou déchargement des boues traités, où lesdites bandes (1) réalisent le mouvement des boues (F) de la station de prélèvement à celle de décharge avec les boues (F) interposés entre les surfaces opposées d'au moins deux bandes (1) et où les bandes (1) confluent en au moins un trait (C) de compression et ensemble de désagrégation des boues.

## Description

La présente invention concerne un appareillage pour le traitement des boues.

Il est connu que les boues produits par des processus industriels, comme par exemple des tanneries, des papeteries, des industries de conserve et les boues de provenance des établisemments de dépuration civils et indutriels, contiennent une quantité réduite de substances solides, en purcentage variable selon leur nature.

Il est aussi connu que, dans le but d'augmenter la concentration des substances solides à l'intérieur desdites boues et en permettre la séparation partielle du liquide, on utilise des systèmes appelés "à filtres" ou "à bandes-presse" qui comprennent des structures complexes qui opèrent la compression des matériaux en traitement pour provoquer la sortie des liquides.

Mais malgré la complexité et le coût de gestion des précités systèmes de traitement connus, les boues traitées présentent encore une grande quantité de liquides, cela est incompatible avec les exigeances de productions actuelles.

La présente invention se propose d'éliminer les inconvenients précités.
A ce résultat on est parvenu, conformémenet à l'invention, en adoptant l'idée de réaliser un appareillage ayant les caractéristiques décrites dans la revendication 1. D'autres caractéristique font l'objet des revendications dépendentes.

Les avantages qui dérivent de la présente invention consistent essentiellement en ce qu'il est possible obtenir la presque complète déshydratation des boues, c'est-à-dire la separtion des substances solides dans la phase liquide, avec une vitesse élevée de production à des basses consommations énergetiques; qu'un appareillage conformément à l'invention est de fabrication simple, économique et fiable même après un temps prolongé d'utilisation.

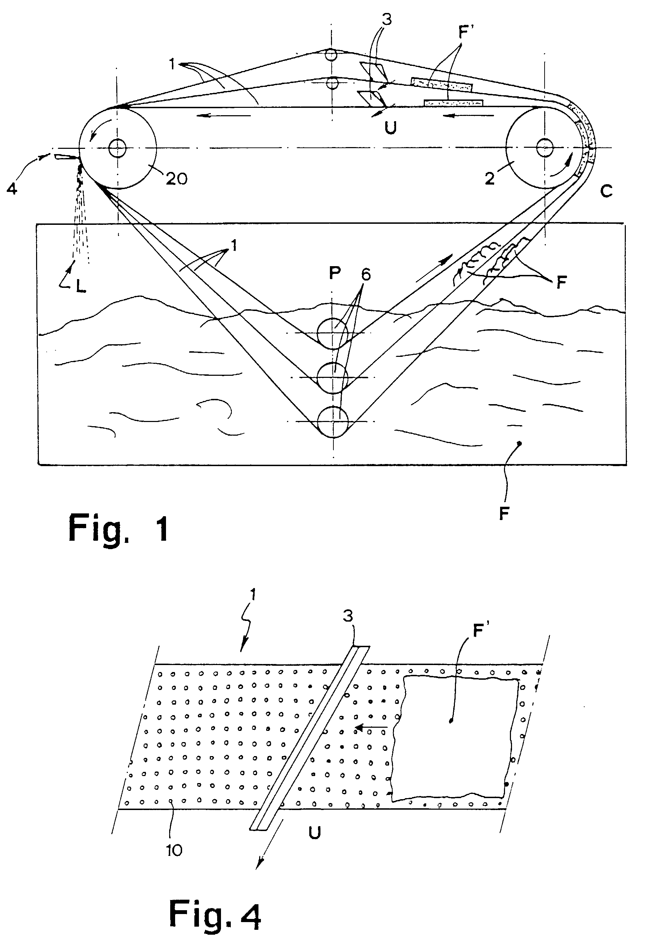

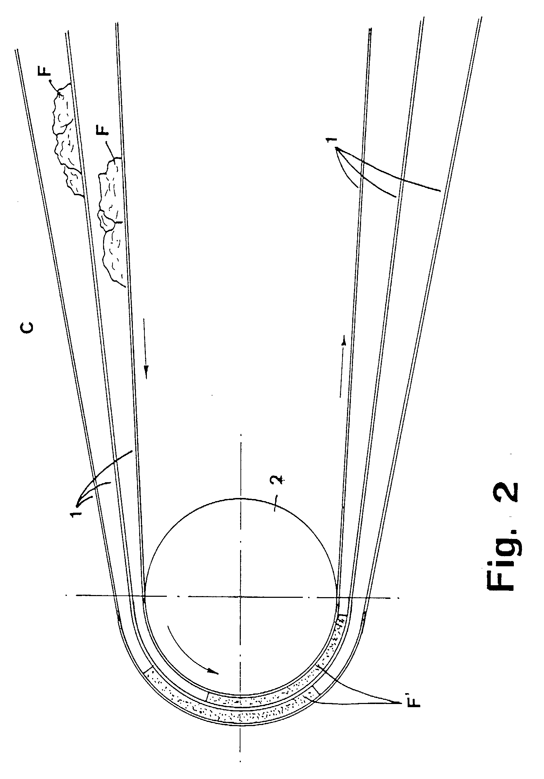

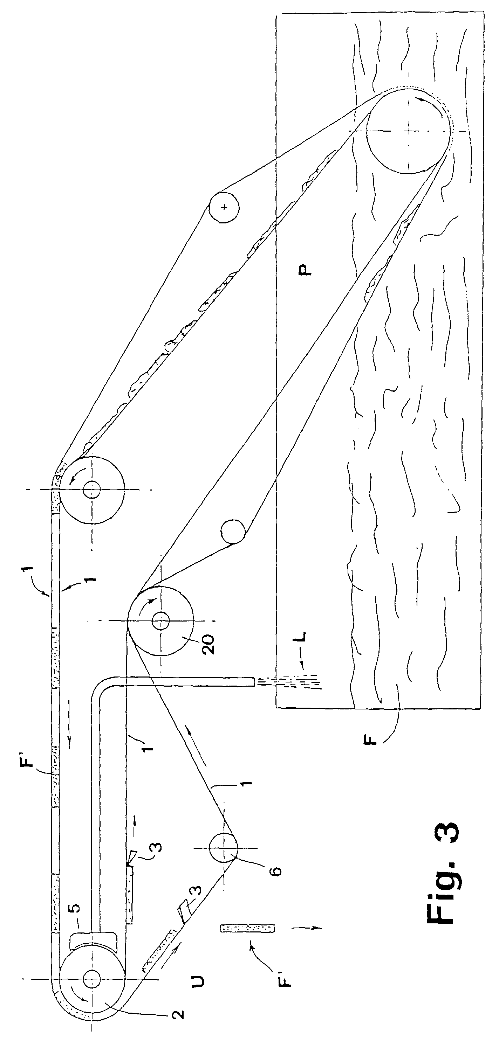

Ces avantages et caractérisitiques de l'invention ainsi que d'autres seront plus et mieux compris de chaque homme du métier à la lumiere de la description qui va suivre et à l'aide des dessins annexés donnés à titre d'exemplification pratique d'une forme concrète de réalisation, mais à ne pas considérer dans le sens limitatif; dessins sur lesquels: la fig. 1 représente un schéma opératif d'une machine conformément à l'invention; la fig. 2 représente un détail du schéma de la fig. 1; la fig. 3 représente un schéma opératif d'une machine conformément à l'invention, selon une autre forme de réalisation; la fig. 4 représente une vue en plan partielle d'une bandes pour un appareillage conformément à l'invention.

Réduit à sa structure essentielle et en référnce aux figures des dessins annexés, un appareillage pour le traitement des boues conformément à l'invention comprend au moins une unité avec plusieurs bandes (1) superposées fermées en anneau entre une station (P) de prélèvement ou d'alimentation des boues à traiter et une station (U) de sortie ou de décharge des boues traitées. Pour la façon où lesdites bandes (i) sont disposées, on obtient le mouvement des boues (F) de la station de prélèvement (P) vers celle de sortie (U), interposées entre les bandes (1).
Au moins un rouleau de traïnement des bandes (1) est prévu positionable par tout sur le parcours de marche des bandes (1). En outre, les bandes (1) sont disposées de maniére à délimiter au moins un trait (C) de compression et désagrégation des boues (F) prélèvées de la précitée station (P), laquelle désagrégation advient par effet de la vitesse relative entre les bandes (1) entre lesquelles lesdites boues (F) résultent interposées, ladite vitesse relative étant opportunement gardée différente de zero. Pour obtenir un tel effet, comme illustré dans les figs. 1-3 des dessins annexés, il est prévu un rouleau (2), par exemple un rouleau cylindrique à section circulaire constant, sur laquelle surface confluent les bandes (1) et tournante autour au axe respectif selon le vers de mouvement des bandes (1) sur lesquelles sont mouvementées au moyen du même cylindre (2) et confluent sur des cylindres foux (20) prévus le long du parcours, en aval de la station de décherge (U) comme simplifié dans la fig. 1 ou aussi en amont comme illustré dans la fig. 3. Vue la différente longueur du parcours de chaque bande (1) et puisque les bandes (1) sont mouvementées au moyen du même rouleau (2), dans le trait (C) les bandes (1) voyagent avec une vitesse différente. Plus précisement, la vitesse de chaque bande (1) augmente pendant l'augmentation de sa distance de la surface du rouleau (2). En outre, l'éspace entre les bandes devient progressivement Plus petit. Par conséquent, le matériel (F) intérposé entre deux bandes opposées en correspondance du trait (C) de l'appareillage resulte sumi à un'action de désagrégation et au même temps de écrasement avec un' intensité progressivement croissante. En correspondance de la station de décharge (U) sont opportunement prévus des moyens pour réaliser l'éloignement du matériel (F') qui a été traité, avec au moins un racleur (3) pressant sur la surface active de chaque bande (1), sur laquelle surface le matériel (F') peut adhérer. Le liquide (L) extrait du matériel en traitement à la suite de la compression ainsi opérée est eloigné de la surface des cylindres (20) en aval de la station de sortie (U), vers lesquels le liquide tend à se recueillir, au moyen d'au moins un outil de rasage (4) comme illustré dans la fig. 1 ou, en alternative, au moyen d'une pompe avec une bouche d'aspiration (5) qui insiste sur le rouleau (2) comme illustré dans la fig. 3.
En aval de la station de décharge (U) il est prévu de opérer un aloignement progressif des bandes (1) pour permettre le rétablissement continuel de leur état initial. Dans ce but, des cylindres séparateurs (6) sont utilisables placés dans des positions prédéterminées par l'appareillage, en aval de la station (U) et qui insistent sur les mêmes bandes (1).

Avantageusement, conformément à l'invention, une ou plusieurs bandes (1) peuvent être pourvues d'une serie de trous passants (10), par exemple organisés "en nid d'abeille", de manière qu'en position d'exercise de l'appareillage les trous de chaque bandes resultent verticalement décalés par rapport à ces de la bande inférieure ou supérieure, pour favoriser la chute par gravité seulement des liquides.
Les bandes précitées (1) peuvent être, par exemple, en acier inoxydable, en matériel plastique artificiel comme par exemple du PVC, en gomme et aussi en forme de tissu en fils d'acier ou en matériale plastique. Il reste entendu que le matériel choisi varie en relation à la nature des boues à traiter.

L'appareillage décrit permet d'obtenir la séparation presque totale des substances solide de la phase liquide, ainsi que les boues qui ont été traitées sont presque completement séches, de volume extremément réduit par rapport à l'état initial et susceptible d'ultérieurs traitements selon leur nature. Par exemple, s'il s'agit de boues de papeteire, le matériel (F') été traité est recyclable pour la réalisation de sous-fonds pour routiers ou pistes ou aussi pour fabriquer de panneuax isolants. Il va de soi que d'autre employs possibles du matériel (F') produit conformément au traitement décrit varient en relation à la nature des matériaux (F) à traiter.

## Revendications

1. Appareillage pour le traitement des boues caractérisé en ce qu'il comprend au moins une unité avec plusieurs bandes (1) superposées fermées en anneau entre une station (P) de prélèvement ou d'alimentation des boues à traiter et une station (U) de sortie ou de décharge des boues traitées. Où lesdites bandes (1) comportent le mouvement des boues (F) à traiter de la station de prélèvement (P) vers celle de décharge (U) avec les boues (F) interposées entre les surfaces opposées d'au moins deux bandes (1) et où les bandes (1) confluent en au moin un trait (C) de compression et de désagrégation des boues (F), dont la désagrégation adviens par effet de la vitesse relative, différente de zero, des bandes (1) antre lesquelles lesdites boues (F) sont interposées.

2. Appareillage selon la revendication 1 caractérisé en ce que en correspondance de chaque trait (C) de compression et de désagrégation des boues (F) un rouleau (2) est prévu sur la surface duquel les bandes (1) confluent et tournant autour à l'axe respectif selon la direction du mouvement des bandes (1) lesquelles confluent sur d'autres cylindres foux (20).

3. Appareillage selon une ou plusieurs des revendications précedentes caractérisé en ce qu'il comprend des moyens d'eloignement du liquide extrait des boues (F) en traitement.

4. Appareillage selon une ou plusieurs des revendication précedentes caractérisé en ce que en aval de ladite station de déchargement ou de sortie (U) lesdites bandes (1) sont distancées au moyen de séparateurs (6) pour permettre en continu le rétablissement de leur état initial.

5. Appareillage selon une ou plusieurs des revendications précédentes caractérisé en ce que lesdites bandes présentent une pluralité de trous organisés de manière que ces de chaque bande sont verticalement décalés par rapport à ces de la bande inférieure ou supérieure.
